Europäisches Patentamt

European Patent Office

Office européen des brevets

(11) Publication number: **0 439 225 A2**

# EUROPEAN PATENT APPLICATION

(21) Application number: **91200088.2**

(22) Date of filing: **17.01.91**

(51) Int. Cl.⁵: **B65G 7/08**

(30) Priority: **19.01.90 NL 9000146**

(43) Date of publication of application:
**31.07.91 Bulletin 91/31**

(84) Designated Contracting States:
**AT BE CH DE DK ES FR GB IT LI LU NL SE**

(71) Applicant: **Luyken, Aloysius Marinus**
**Graafschedijk 75**
**NL-5364 PR Escharen(NL)**

(72) Inventor: **Luyken, Aloysius Marinus**
**Graafschedijk 75**
**NL-5364 PR Escharen(NL)**

(54) **Transport/tilting installation to transport and tilt profile steel and plates or any other heavy and/or long materials.**

(57) Stationery and or mobile tilting unit to tilt profile steel or plate and/or other heavy or long materials where each unit has been equipped with at least 4 tilting arms, that is at least 2 tilting arms at each side to support the material so that the material to be tilted is always supported on at least 2 points during the tilting and or transport-process.

FIG. 3

The invention is the application of a new concept of a transport and tilting installation to transport and tilt profile steel and plate and or any other heavy and or long materials.

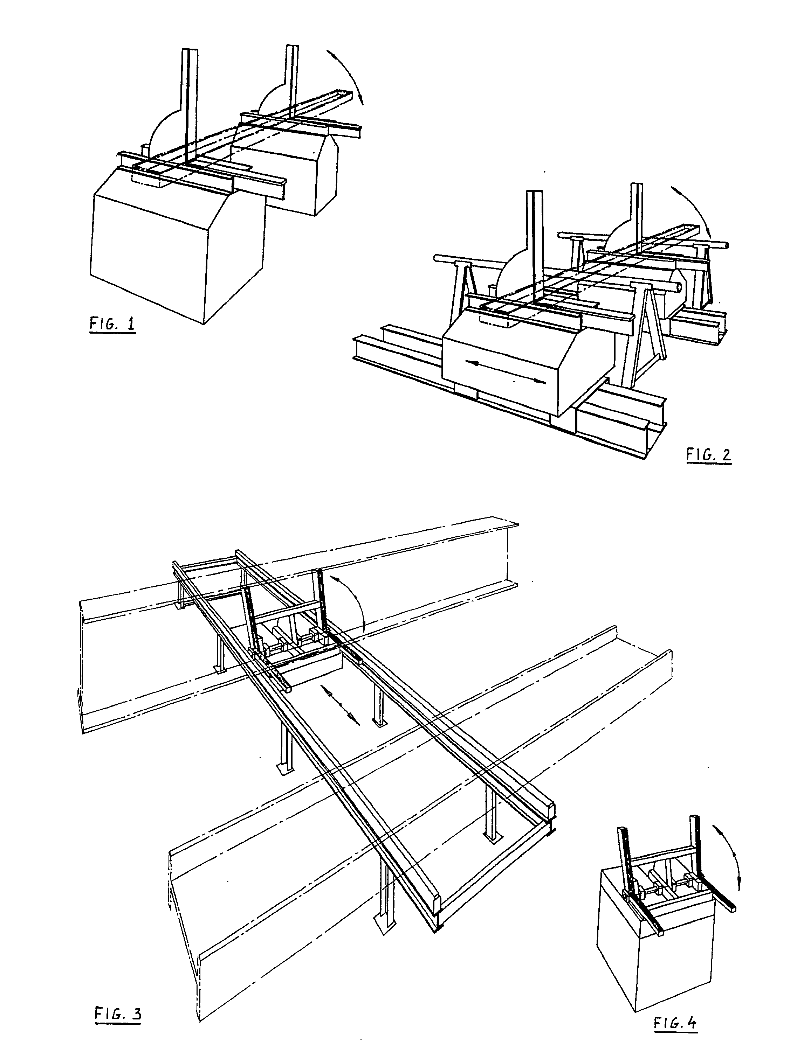

Well known are the transport and tilting installations containing two rotary arms, that is one arm at each side, of a transport wagon or of a unit. The installation then possibly is a stationery tilting installation (fig. 1) or a mobile transport and tilting installation (fig. 2), which can transport and/or tilt profile steel and/or plate.

This method has the following disadvantages:

- since a unit only has 2 arms available to transport or tilt, it only has 1 arm available at each side. Therefore you will always need at least two units to transport or tilt material, because otherwise the material is not supported at 2 points and consequently topples over.

- the direction of the material that has to be tilt or transported highly depends on the location of at least 2 transport and tilting units, which together form the supports for the material.

Not known is a transport and tilting installation having at least 4 rotary arms, that is 2 arms at each side of a transport waggon or unit.

This method has the following advantages:

- since a unit has at least 4 arms available to transport or tilt, each unit has at each side at least 2 arms available. This means that it is possible to tilt or transport material with one single unit, separately and independently from other units. In this case the material is supported at two points and therefore it will not topple over.

- the direction of the material to be tilted or transported does not depend so highly on the location of the transport and tilting unit, because the material in the unit is kept or put in position by at least 2 arms at each side.

This invention aims at technical advantages by using the above mentioned advantages and also at savings in construction and use in installations where such transport and tilting units can be brought into action.

This goal is reached by supplying a stationery (fig. 3) and also mobile tilting unit (fig. 4) provided that each unit has at least 4 tilting arms, that is at least 2 tilting arms at each side, preferably connected with each other to create an even movement.

It is also possible to replace the minimum of 2 arms at each side by a plate or a construction that provides at least 2 points of support for the different materials to be transported or tilted.

**Claims**

1. Stationery tilting unit to tilt profile steel or plate and/or other heavy or long materials **with the characteristic feature** that each unit has been equipped with at least 4 tilting arms, that is at least 2 tilting arms at each side to support the material so that the material to be tilted is always supported on at least 2 points during the tilting process.

2. Mobile tilting and transport unit to tilt and transport profile steel or plate and/or other heavy or long materials **with the characteristic** feature that each unit has been equipped with at least 4 tilting arms, that is at least 2 tilting arms at each side to support the material so that the material to be tilted is always supported at least 2 points during the tilting and transporting process and which unit also has been equipped with an installation which enables it to drive.

3. Stationery tilting unit according to conclusion 1 **with the characteristic feature** that 2 or more tilting arms at each side are connected with each other, that is are replaced by a plate or other construction aiming at the same result.

4. Mobile tilting and transport unit according to conclusion 2 **with the characteristic feature** that 2 or more tilting arms at each side are connected with each other, that is are replaced by a plate or other construction aiming at the same result.

FIG. 1

FIG. 2

FIG. 3

FIG. 4